(19) Europäisches Patentamt

European Patent Office

Office européen des brevets

(11) **EP 2 617 973 A1**

(12) **EUROPEAN PATENT APPLICATION**

(43) Date of publication:
**24.07.2013 Bulletin 2013/30**

(51) Int Cl.:
**F02D 41/02** *(2006.01)* **F02D 35/02** *(2006.01)*
**F02D 37/02** *(2006.01)*

(21) Application number: **12151936.7**

(22) Date of filing: **20.01.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(71) Applicant: **Delphi Automotive Systems Luxembourg SA**<br>**4940 Bascharage (LU)** | (72) Inventors:<br>• **Schlosser, Davy**<br>**54560 Fillieres (FR)**<br>• **Gautier, Thomas**<br>**57970 Yutz (FR)**<br><br>(74) Representative: **Office Freylinger**<br>**P.O. Box 48**<br>**8001 Strassen (LU)** |

(54) **Robust heat-up strategy for catalytic converter**

(57) A method of controlling an internal combustion engine with an exhaust system comprising a catalytic converter is presented, wherein the engine is operable in a heat-up mode promoting the heating rate of said catalytic converter. In the heat-up mode the heat carried by the exhaust gases is iteratively determined; and the heat-up mode is terminated when the sum of the determined heat increments meets a heat threshold.

Fig. 1

**Description**

**FIELD OF THE INVENTION**

The present invention generally relates to catalytic converters and more particularly to a heat-up control strategy for a catalytic converter in the exhaust system of an internal combustion engine.

**BACKGROUND OF THE INVENTION**

Current emission control regulations necessitate the use of exhaust after treatment systems in order to reduce the concentration of combustion byproducts and/or products of incomplete combustion.

Spark ignition (i.e. gasoline) engines conventionally use three-way catalytic converters to satisfy emissions regulations. Such devices can be very effective when operating at their working temperature.

However, when starting-up a cold engine, it takes some time until the catalytic converter reaches its working temperature, during which the converter is inefficient and untreated exhaust gases can exit the exhaust system.

To address this issue, light-off procedures have been developed to increase the rate at which the catalyst converter temperature rises following engine start. A proper implementation and calibration of such procedures allows the control to be applied only where it is useful in expediting catalyst light-off without adversely impacting drivability, engine startability or emissions.

The most current light-off algorithm implemented by the Engine Control Management involves, under enabling conditions, voluntarily deteriorating the engine efficiency by split injection and spark angle adjustment, with some torque reserve, in order to release a greater part of combustion energy in the exhaust gas.

Other possible parameters that can be adapted to promote hotter exhaust gases in the light-off period are: cam phasing to reduce the combustion speed; implementing a richer combustion, increasing engine speed, and/or increasing engine load.

The duration of the light-off period is generally maintained until lapse of a heat-up timer or until a certain engine coolant temperature is reached. However, the coolant temperature may not necessarily be representative of the converter temperature, especially in case retarded ignition has not been applied during a certain time period to give priority to a higher torque demand by the driver.

Another aggravating factor is that many of the calibrated values of the light-off affecting parameters are mapped vs. absolute coolant temperature. It is however not possible to perform calibration so as to take into account all possible circumstances.

As a result, the temperature of the catalytic converter may be very different at the end of the light-off procedure from start to start. And it could negatively impact fuel economy, pollutant emissions or drivability.

**OBJECT OF THE INVENTION**

The object of the present invention is to provide an improved method for assessing the heating state of a catalytic converter.

This object is achieved by a method as claimed in claim 1.

**SUMMARY OF THE INVENTION**

According to the present invention, when an internal combustion engine is operated in a catalyst heat-up mode in order to promote the heating of the catalytic converter, the heat carried in the exhaust gas is iteratively determined and the heat-up mode is terminated once the sum of heat increments meets a pre-set heat threshold.

The present method permits a more realistic and accurate assessment of the heating state of the catalytic converter, as it is able to take into account the amount of heat, and especially of additional heat, that is released in the exhaust gas.

Conventionally, the heat-up mode is carried on until a given time period has elapsed or until a certain engine temperature is reached. The problem related to such approach is that while heat-up mode is active, it is from time to time necessary to give precedence to torque requests by the driver, so that the exhaust gas heat promoting conditions are not applied permanently during the heat-up timer.

The present method is advantageous in that it periodically determines the amount of heat that is actually carried by the exhaust gases and thus allows closely following the amount of heat that arrives at the catalytic converter. It may be noted that the amount of exhaust gas heat required to bring the catalytic converter to its working temperature can be considered constant for similar initial conditions. Accordingly, the heat threshold is preferably a calibrated value depending on initial conditions at engine start-up. The ECU may thus store a map giving the heat threshold depending on e.g. engine temperature.

This ability to determine the heat actually released by the combustion into the exhaust gases permits a more efficient control of the heat-up process, in that in can be ended after a known amount of heat/energy has been delivered into the exhaust. It will also clearly appear that it will permit a more rational management of the process than prior art solutions following a time or temperature approach, where a security margin is applied to take into account such modifications of the heat promoting process to give precedence to priority controls, such as a torque request, and thus the heat-up mode may remain active for longer periods than necessary.

As a result, a robust method of operating a catalyst heat-up mode is obtained, which has proved particularly efficient in gasoline engines.

It may be noted that, in practice, the heat-up mode may not be entered directly at engine start, but within seconds thereafter. However, energy is spent in the exhaust gas as soon as combustion starts. Therefore, the calculation of heat increments in the exhaust gases is preferably carried out as from engine start up and taken into account in the accumulated heat increments.

Preferably, the determination of the heat increments takes into account cylinder wall heat transfer mechanisms, which are significant when starting a cold engine. This can be done by means of a function dependent on engine temperature, e.g. engine coolant temperature increase since start-up.

In the heat-up mode, a desired power loss is advantageously determined for each combustion cycle and subsequently used for determining the fuel quantity to be injected. In practice, such desired power loss is taken into account by the torque structure, together with the driver's torque request, etc., to determine the combustion parameters.

Preferably, the desired power loss takes into account a power loss limit computed under the current running conditions. The desired power loss limit may for example be computed as the difference between a maximum allowable power loss under the engine operating conditions and a power loss margin.

Preferably, the desired power loss is determined as the lesser of the power loss limit and a calibrated value of power loss.

As it has been understood, in the heat-up mode engine parameters affecting the combustion efficiency are adapted, as possible, to increase the heat released in the exhaust gas. A possible exception may be a sudden high torque request by the driver, where the heat-promoting measures are cancelled.

Furthermore, directly after engine start-up, a noticeable heat transfer exists with the cylinder walls, and it may be desirable to control the combustion parameters during such "cylinder heating phase" of the heat-up mode so as to promote heating of the cylinder block. Thereafter, in a so-called "exhaust heating phase", which is typically comparatively longer, the ECU may control the combustion in the conventional way to promote heating of the exhaust gases.

A second heat threshold on the accumulated heat (sum of heat increments) is preferably used to discriminate between the cylinder-heating phase and exhaust-heating phase.

A heat-up progression indicator may be calculated on the basis of the sum of the heat increments and the heat threshold. Such progression indicator may advantageously be used for piloting the heat increasing measures in the heat-up mode.

Furthermore, the combustion parameters can be adapted specifically to the exhaust-heating phase and the cylinder-heating phase, which have different goals. For example, the desired power loss and/or the calibrated value of power loss may be dependent on at least one of the progression indicator, exhaust-heating phase and cylinder-heating phase.

Operating the combustion on the basis of the heat-up progression indicator, exhaust-heating phase and cylinder-heating phase does of course require a greater amount of calibration sets.

These and other preferred embodiments of the present method are recited in the appended dependent claims.

It remains to be noted that, in the present invention, the term "heat" is used indiscriminately and interchangeably with "thermal energy", as is known in the art.

## BRIEF DESCRIPTION OF THE DRAWINGS

The present invention will now be described, by way of example, with reference to the accompanying drawings, in which:

FIG. 1: is a flow chart illustrating the iterative determination of the accumulated heat released in the exhaust gas;

FIG. 2: is a graph illustrating the rise of the converter temperature and of the accumulated heat, as well as a heat-up progression indicator;

FIG. 3: is a diagram showing the determination of the desired power loss; and

FIG. 4:    is a graph illustrating the engine speed, accumulated heat, maximum power loss and desired power loss, vs. time.

## DETAILED DESCRIPTION OF A PREFERRED EMBODIMENT

As it is well known, modern engines include in their exhaust system a catalytic converter able to reduce emissions. Gasoline engines, for examples, are nowadays fitted with so-called "three way" catalytic converters, so named because they convert the three main pollutants in automobile exhaust: carbon monoxide (CO), unburned hydrocarbons (HC) and oxides of nitrogen (NOx) into $CO_2$, $N_2$ and $H_2O$.

Conventionally, engine operation is controlled by a programmed, electronic engine control unit (ECU) or the like, as is known in the art. The ECU is configured generally to receive a plurality of input signals representing various operating parameters associated with the engine. The ECU is further typically configured with various control strategies for producing needed output signals, such as fuel delivery control signals (for fuel injectors) all in order to control the combustion events. In particular, the ECU determines the fuel quantity to be injected depending on the driver's torque demand.

As it pertains most particularly to the present invention, the ECU is configured to be able to operate in a catalytic converter heat-up mode under certain conditions, in particular when starting the engine with a cold or cool catalytic converter, i.e. when the catalytic converter is at a temperature below its working temperature. As it is known, a catalytic converter operates properly at its working temperature (generally between 350 and 400°C) and it is thus desirable to reduce the time needed to bring the catalyst to such temperature when starting from a cold engine. Therefore, the ECU may operate a heat-up mode designed to increase the rate at which the catalyst converter temperature rises. In this connection, it is known to voluntarily deteriorate the combustion to increase the amount of heat released in the exhaust gases. Other commonly used measures for increasing the exhaust gas temperature are: higher internal EGR rate, leaner air-fuel ratio for mixture preparation.

Referring now more specifically to the present invention, a thermal management approach for such heat-up procedure of a catalytic converter is proposed, which allows an improved assessment of the heat-up state of the catalyst and when to terminate the exhaust heat increasing measures. A preferred embodiment of the present invention is now described in detail below.

The present method proposes, when the heat-up mode is active, to iteratively determine the heat carried by (or released in) the exhaust gases, and to terminate the heat-up mode when the sum of the determined heat increments meets a heat threshold. This approach relies on the fair assumption that the energy required to warm up the converter and reach the light-off temperature is substantially constant from start to start, for similar initial conditions.

This is preferably carried out by monitoring the fuel injection conditions, which is also related to other engine parameters such as, e.g., cam phaser, fuel pressure, engine load, injection timing, air fuel ratio.

In the present method, an increment of heat, i.e. the amount of heat released in the exhaust over a monitored time period is estimated as (Eq. 1):

$$Heat\_inc = Fuelinj.HeatVal \bullet [1 - ThermalEff \bullet SparkEff] \bullet K(CT - StartUpCT)$$

Where:

*Fuelinj* is the injected fuel quantity over the considered time period (which may encompass several combustion cycles),

*HeatVal* is the specific fuel heating value (here the lower heating value LHV),

*ThermalEff* is the thermal efficiency of the combustion (ratio of indicated work, obtained from Indicative Mean Effective Pressure, over energy available in the fuel injected),

*SparkEff* is the ratio between the combustion efficiency with final delivered spark timing (i.e. the spark timing finally executed) and the combustion efficiency with optimal spark timing,

*K* is a scaler variable, which is read from a table dependent on the difference between the coolant temperature (*CT*) and the coolant temperature at start-up (*StartUpCT*).

In other words, it is considered that for the time interval (period n), the energy that does not go to the wheels is given by the energy generated by the combusted fuel (*Fuelinj•HeatVal*) multiplied by the complementary value of the product of the thermal and spark efficiencies, which are preferably dependent on other combustion affecting parameters (e.g. engine speed and load, fuel and spark timing...). The scaler $K$ permits adapting the energy actually released in heat in the exhaust gases depending on the engine temperature.

At a given time or period $n$, the accumulated heat that has been released to the exhaust gas is given by (Eq. 2):

$$AccHeat_n = AccHeat_{n-1} + Heat\_inc$$

$AccHeat_n$ is the cumulative heat, i.e. the sum of the approximate heat increments *Heat_inc* spent in the exhaust gases over time, during the heat-up mode and preferably since engine start.

Calibration allows determining the amount of heat that is required from engine start-up to reach the working temperature of the catalytic converter, this heat amount being considered substantially identical for similar initial conditions. $AccHeat_n$ may accordingly be compared to a heat threshold $Q_{th}$ representing the heat to be released in the exhaust gases to bring the Catalytic converter to the working temperature (where $Q_{th}$ preferably depends on initial/start-up conditions). Once the threshold $Q_{th}$ is met, meaning that the required heat to reach the working temperature of the catalytic converter has been delivered in the exhaust, the heat-up mode may be terminated.

Preferably, the present method takes into account the heat transfer in the cylinder block. Indeed, upon engine coldstart, a non-negligible mechanism of heat transfer between the relatively cold engine walls and the hot combustion gases occurs. Hence a lot of the heat that would normally end up in the exhaust system is transferred to the engine block.

To address this heat transfer mechanism, the present method is advantageously designed to take into account such "cylinder walls heating phase" when the engine is started. This is preferably done by means of the scaler $K$, which is a continuous function determined by calibration, and dependent on the engine (coolant) temperature

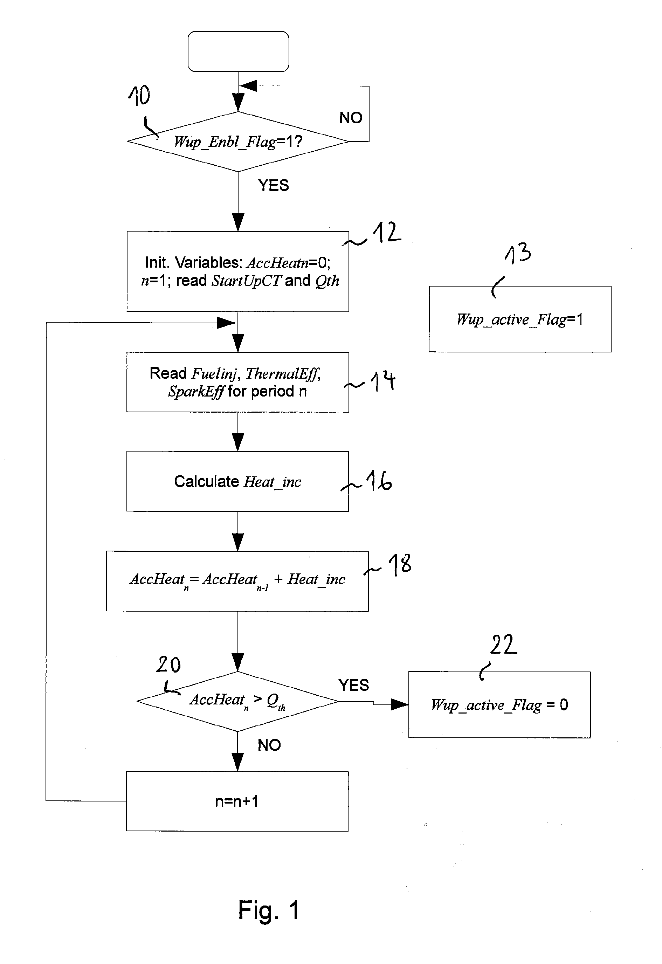

Fig.1 is a principle flowchart illustrating a preferred algorithm implementing the above thermal assessment strategy based on a heat threshold. It may be noted that, in practice, a predetermination of whether heat-up mode may be required, or not, is preferably carried out by the ECU when ignition is switched on, i.e. before the engine is started. The engine is then started, and the ECU will determine whether and when the heat-up mode may actually be entered/activated. However, since heat is released into the exhaust as from the start-up, although to a comparatively lower extent as compared to a warm engine, it is desirable to determine the heat increments released into the exhaust as from start-up.

Referring now to Fig.1, the first step (at 10) is thus the test, upon ignition, of whether the catalyst heat-up mode may be desirable. In the affirmative, the flag *Wup_enabled_Flag* is set to 1, which allows activation of the heat-up mode when the ECU considers it opportune. A number of variables are then initialized (box 12), in particular: the cumulative heat counter $AccHeat_n$ is set to zero; the period/increment counter to is set to $n=1$; the engine coolant temperature *StartUpCT* is read/memorized. At the same time, $Q_{th}$ is also preferably read from a table in function of the initial conditions, e.g. engine temperature.

Then for each period $n$ following start-up, the corresponding fuel injection amount, thermal efficiency and spark efficiency are determined (box 14) for calculating the heat increment *Heat_inc* corresponding to the period (box 16) in accordance with equation 1. And this increment is added to the cumulative heat amount $AccHeat_n$ at 18.

As it will be understood, the calculations required for the present method are simple and can be made in real time; and they use conventional concepts of thermal and spark efficiencies. Accordingly, it is possible to closely monitor the delivered amount of heat, respectively the heating state of the catalytic converter.

As mentioned above, after engine start-up, the ECU will determine when to enter the heat-up mode. The heat-up mode is generally activated within up to a few seconds after start-up, mainly once stable running conditions are reached. To enter the heat-up mode, the ECU sets a flag *Wup_active_Flag* to 1 (as indicated by box 13), whereby measures are taken to promote a rapid heat-up of the catalytic converter. It may be noticed that the method of Fig.1 runs concurrently with exhaust heat promoting fuel injection schemes operated by the ECU, which may however give precedence to driver torque requests, when necessary.

Activation of the heat-up mode will change the combustion parameters to promote heat release in the exhaust, but the calculations steps 14-18 remain unchanged.

When the cumulative heat exceeds the heat threshold $Q_{th}$, the heat-up mode can be stopped and the flag *Wup_active_Flag* is then set to 0 (box 22), whereby the ECU will terminate the heat-up mode.

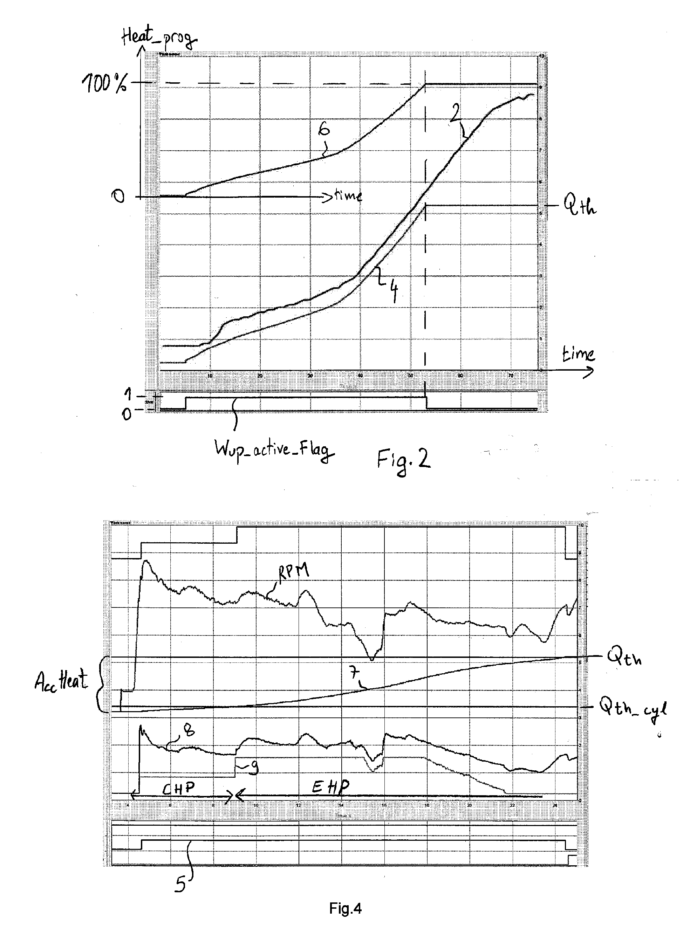

For illustration purposes, Fig.2 is a graph showing the catalyst bed temperature and the cumulative heat vs. time. As can be seen, the temperature of the catalyst bed (line 2) starts increasing as soon as the Wup_active_Flag is set to 1. The cumulative heat $AccHeat_n$ curve 4 and the converter bed curve 2 rise similarly. As soon as $AccHeat_n$ reaches $Q_{th}$, the flag is set back to 0.

It may be noted that since the threshold heat $Q_{th}$ represents the heat required to bring the catalytic converter to its light-off temperature and since $AccHeat_n$ is an indication of the actually delivered heat amount, one may calculate the progression status of the heat-up process. This is shown by line 6 in Fig. 2, which is calculated as $Heat\_Prog = AccHeat_n /Q_{th} \times 100$.

This progression indicator $Heat\_Prog$ may be advantageously used in the control of the combustion affecting parameters, which can then be adapted to the actual heating status of the catalyst.

As it will be understood, the present method can be implemented as a sub-routine in catalytic converter heat-up algorithms based on any appropriate heat promoting measures, in order to assess the heating state of the catalytic converter. In particular, such heat promoting measures may include injecting additional fuel to increase the available energy, which generally also requires modifying other injection parameters such as injection timing, spark timing and/or split injection.

It shall further be appreciated that in the present method the amount of additional fuel for the injection is preferably related to a desired power loss $DesPLoss$, as explained below. Here again, the desired power loss $DesPLoss$ preferably takes into account the cylinder heating phase (at the beginning of the heat-up mode) and the exhaust gas heating phase. Hence in both phases a constant target fraction of the fuel energy is used for heating by degrading the combustion efficiency.

The so-determined desired power loss $DesPLoss$ is subsequently used by the torque structure so that a torque reserve demand is created and used in the torque structure algorithm of the ECU, impacting air, fuel and spark calculations. As it is known, the torque structure in an ECU controls all torque influencing actuators in function of torque demands originating from the driver, engine management functions and external subsystems.

It will however be understood that the lower efficiency should preferably not impact the drivability and combustion stability. Therefore, a power loss limit $PLossLimit$ is introduced.

For each calculation step, a maximum power loss is hence determined, which represents the maximum allowable power loss $MaxPLoss$ based on the current engine conditions, in order to avoid engine stall or hindering driveability. A margin $PLossMargin$ will then be subtracted from the maximum power loss $MaxPLoss$.

$MaxPLoss$ may be calculated by the following formula (Eq. 3):

$$MaxPLoss = MaxSparkEffLoss(IMEP, EngSpd) \cdot Fuelinjlast \cdot HeatVal \cdot ThermEff \frac{N \cdot EngSpd}{120}$$

where

$MaxSparkEffLoss$ is the maximum loss of spark efficiency to warrant the combustion, which is a calibrated value mapped in function of lastly determined engine speed $EngSpd$ and $IMEP$ values (i.e. basically torque, IMEP standing for Indicated Mean Effective Pressure),

$Fuelinjlast$ is the last injected fuel quantity over the considered time period,

$HeatVal$ is the specific fuel heating value (here the LHV),

$ThermalEff$ is the thermal efficiency of the combustion (ratio of indicated work —obtained from IMEP— over energy available in the injected fuel)

N is the number of engine cylinders.

And the power loss limit is then calculated as (eq. 4):

$$PLossLimit = MaxPLoss - PLossMargin$$

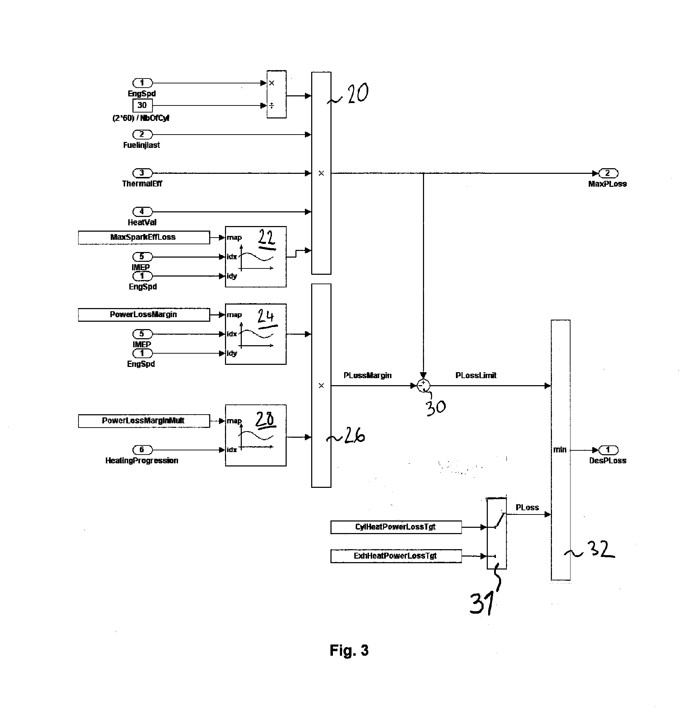

Fig.3 is a principle diagram illustrating the determination of MaxPLoss and DesPLoss. On the one hand, Max-PLoss is computed in block 20 by applying equation 3. Input variables to block 20 are: engine speed EngSpd (divided by 30, for a 4 cyl. Engine); the last injected fuel quantity Fuelinjlast; the thermal efficiency in optimal conditions (calibrated value); and the maximum spark efficiency loss, which is read from table 22 in function of IMEP (representing torque) and engine speed.

On the other hand, a rough power loss margin is determined from a table 24 in function of IMEP and engine speed, and input to block 26. This rough power loss margin is multiplied by a coefficient read from table 28 depending on the progression indicator $Heat\_Prog$. The output of block 26 is then the power loss margin $PLossMargin$ that is substracted to $MaxPLoss$ in operator 30 in accordance to equation 4, to obtain the power loss limit $PLossLimit$.

At this point, $DesPLoss$ is preferably computed by comparing the $PLossLimit$ to a calibrated value of power loss $PLoss$ that depends on the operating status. $PLoss$ is a calibrated value that is here dependent on the phase, as indicated by selector 31. As it will appear from Fig.4, $PLoss$ is preferably a constant value over the respective phase (i.e. cylinder or exhaust gas heating phase). The power loss value $DesPLoss$ actually used in the engine control is finally the lesser of *PLoss* and *PLossLimit,* as indicated by box 32.

Fig.4 illustrates the effects of the present method allowing a precise control of the catalyst heat-up process and shows (vs. time): engine speed; accumulated heat (AccHeat) — line 7; *MaxPLoss* — line 8; *DesPLoss* — line 9; *and Wup_active_Flag*— line 5.

As can be seen, the heat-up mode is entered rapidly upon start-up (*Wup_active_Flag*=1 — line 5) and heat starts to accumulate. The significant heat transfer occurring at the beginning of the heat-up phase can be observed. In this connection, a cylinder heating threshold *Qth_cyl* is preferably used, to discriminate between the cylinder heating phase (CHP) and exhaust heating phase (EHP).

Discriminating between the CHP and EHP is advantageous in that one can control combustion parameters on the basis of such information. In particular, during the CHP the combustion, in heat-up mode, is controlled to increase the heat transfer to the cylinder walls; this can be achieved by playing e.g. on injection timing and air-fuel ratio. Conversely, in the EHP the combustion parameters are optimized for increasing the heat released to the exhaust gases. As can be observed in Fig.4, during EHP the accumulated heat grows more rapidly.

DesPLoss is also one of the combustion parameters that can be adapted depending on CHP or EHP. As can be seen in Fig.4 the value of *DesPLoss* is lower during CHP. Another apparent issue in line 9 is a brief decrease of *DesPLoss,* by application of *PlossMargin,* to prevent combustion instability (e.g. in case of a brief increase in torque request). Then towards the end of the heat-up phase, the *PlossMargin* is increased (e.g based on *Heat_Prog*). When *AccHeat* reaches *Qth, Wup_active_Flag* is set to 0 and the heat-up mode is terminated.

The present method hence provides an efficient and accurate method of determining the end of a heat-up mode for a catalytic converter of an internal combustion engine, especially a gasoline engine. The calculations are relatively simple and use concepts that are usual in the art and potentially readily available from the ECU. In particular, concepts such as IMEP, thermal and spark efficiencies, power loss and maximum loss of spark efficiency are readily understood by those skilled in the art and need not be explained in detail herein.

The present method is applicable with any measures to promote a rapid heat-up of the catalytic converter, and which, likewise, are known to those skilled in the art and need not be described herein.

**Claims**

1. A method of controlling an internal combustion engine with an exhaust system comprising a catalytic converter, wherein said engine is operable in a heat-up mode promoting the heating rate of said catalytic converter; **characterized in that** in said heat-up mode the heat carried by the exhaust gases is iteratively determined; and **in that** the heat-up mode is terminated when the sum of the determined heat increments meets a heat threshold.

2. The method according to claim 1, wherein said heat increments are determined on the basis of the injected fuel quantity, spark efficiency and thermal efficiency, over the corresponding time period.

3. The method according to any one of the preceding claims, wherein said heat threshold is a calibrated value depending on initial conditions at engine start-up.

4. The method according to claim 1, 2 or 3, wherein the determination of said heat increments takes into account cylinder wall heat transfer, preferably by means of a function dependent on engine temperature.

5. The method according to any one of the preceding claims, wherein in said heat-up mode, a desired power loss is determined for each combustion cycle and subsequently used for determining the fuel quantity to be injected.

6. The method according to claim 5, wherein said desired power loss takes into account a current limit of power loss; and, preferably, said desired power loss is the lesser of a power loss limit and a calibrated power loss value.

7. The method according to claim 5, wherein said power loss limit is computed as the difference between a maximum allowable power loss under the engine operating conditions and a power loss margin.

8. The method according to claim 7, wherein said maximum allowable power loss is determined on the basis of a maximum loss of spark efficiency dependent on torque and engine speed, the injected fuel quantity and the thermal efficiency with optimal spark.

9. The method according to any one of the preceding claims, wherein in said heat-up mode engine parameters affecting the combustion efficiency are adapted, as possible, to increase the heat released in the exhaust gas.

10. The method according to any one of the preceding claims, wherein the method distinguishes between a cylinder-heating phase and an exhaust-heating phase, preferably on the basis of a second heat threshold on accumulated heat.

11. The method according to any one of the preceding claims, wherein in said cylinder heating phase, combustion parameters are optimized to promote cylinder block heating; and in said exhaust heating phase, combustion parameters are optimized to promote the heating of the exhaust gases.

12. The method according to any one of the preceding claims, wherein in said heat-up mode the combustion efficiency is degraded, preferably by retarding the spark timing and splitting injection.

13. The method according to any one of the preceding claims, wherein in said heat-up mode, heat increasing measures are piloted on the basis of a heat-up progression indicator and/or depending on said exhaust heating phase or cylinder heating phase.

14. The method according to claim 13, wherein said heat-up progression indicator is calculated on the basis of the sum of the heat increments and the heat threshold.

15. The method according to claim 13 or 14, wherein said engine parameters affecting the combustion efficiency are adapted depending on said heat-up progression indicator.

16. The method according to claim 13 or 14, wherein said desired power loss, respectively said calibrated power loss value, is dependent on at least one of said progression indicator, exhaust-heating phase and cylinder-heating phase.

17. The method according to any one of the preceding, wherein exhaust gas heat increments are determined and accumulated as from engine start-up.

*10*

Wup_Enbl_Flag=1?

NO

YES

*12*

Init. Variables: *AccHeatn*=0;
*n*=1; read *StartUpCT* and *Qth*

*13*

Wup_active_Flag=1

Read *Fuelinj, ThermalEff,
SparkEff* for period n

*14*

Calculate *Heat_inc*

*16*

$AccHeat_n = AccHeat_{n-1} + Heat\_inc$

*18*

*20*

$AccHeat_n > Q_{th}$

YES

*22*

Wup_active_Flag = 0

NO

n=n+1

Fig. 1

Fig. 2

Fig.4

**Fig. 3**

Europäisches
Patentamt

European
Patent Office

Office européen
des brevets

# EUROPEAN SEARCH REPORT

**Application Number**

EP 12 15 1936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 613 360 A (IWAI AKIRA [JP] ET AL) 25 March 1997 (1997-03-25) | 1-4,12, 17 | INV. F02D41/02 |
| Y | * column 2, line 20 - column 3, line 15 *<br>* column 5, lines 9-13 *<br>* column 8, line 56 - column 9, line 2 *<br>* column 7, lines 23-37 *<br>* column 6, line 55 - column 7, line 10 *<br>----- | 5-11, 13-16 | F02D35/02<br><br>ADD.<br>F02D37/02 |
| X | EP 2 233 725 A1 (HONDA MOTOR CO LTD [JP]) 29 September 2010 (2010-09-29)<br>* paragraphs [0007] - [0009], [0013] *<br>----- | 1,3,10, 11,13 | |
| Y | EP 2 128 417 A1 (TOYOTA MOTOR CO LTD [JP]) 2 December 2009 (2009-12-02)<br>* the whole document *<br>----- | 5-11, 13-16 | |
| A | JP 2004 044527 A (TOYOTA MOTOR CORP) 12 February 2004 (2004-02-12)<br>* abstract *<br>----- | 1 | |
| A | US 2003/070423 A1 (MORINAGA SYUJIRO [JP] ET AL) 17 April 2003 (2003-04-17)<br>* the whole document *<br>----- | 1-17 | **TECHNICAL FIELDS SEARCHED (IPC)**<br><br>F02D |

The present search report has been drawn up for all claims

| Place of search | Date of completion of the search | Examiner |
|---|---|---|
| The Hague | 24 July 2012 | Blasco, José Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 15 1936

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2012

| Patent document cited in search report | | Publication date | Patent family member(s) | | Publication date |
|---|---|---|---|---|---|
| US 5613360 | A | 25-03-1997 | JP | 7229419 A | 29-08-1995 |
| | | | US | 5613360 A | 25-03-1997 |
| EP 2233725 | A1 | 29-09-2010 | EP | 2233725 A1 | 29-09-2010 |
| | | | JP | 4789291 B2 | 12-10-2011 |
| | | | JP | 2009162190 A | 23-07-2009 |
| | | | WO | 2009087707 A1 | 16-07-2009 |
| EP 2128417 | A1 | 02-12-2009 | CN | 101641512 A | 03-02-2010 |
| | | | EP | 2128417 A1 | 02-12-2009 |
| | | | JP | 4483885 B2 | 16-06-2010 |
| | | | JP | 2008240719 A | 09-10-2008 |
| | | | US | 2010017095 A1 | 21-01-2010 |
| | | | WO | 2008120664 A1 | 09-10-2008 |
| JP 2004044527 | A | 12-02-2004 | JP | 4100077 B2 | 11-06-2008 |
| | | | JP | 2004044527 A | 12-02-2004 |
| US 2003070423 | A1 | 17-04-2003 | NONE | | |

EPO FORM P0459

For more details about this annex : see Official Journal of the European Patent Office, No. 12/82